(19) Europäisches Patentamt
European Patent Office
Office européen des brevets

(11) Veröffentlichungsnummer: **0 304 548 A1**

# (12) EUROPÄISCHE PATENTANMELDUNG

(21) Anmeldenummer: **88107668.1**

(51) Int. Cl.4: **A01G 9/00 , E04D 11/00**

(22) Anmeldetag: **13.05.88**

(30) Priorität: **26.08.87 DE 3728470**

(43) Veröffentlichungstag der Anmeldung: **01.03.89 Patentblatt 89/09**

(84) Benannte Vertragsstaaten: **AT BE CH DE ES FR GB IT LI LU NL SE**

(71) Anmelder: **Firma Carl Freudenberg**
**Höhnerweg 2-4**
**D-6940 Weinheim/Bergstrasse(DE)**

(72) Erfinder: **Heckel, Klaus, Dr.**
**Am Wetzelsberg 6**
**D-6946 Gorxheimertal(DE)**
Erfinder: **Graab, Gerhard, Dr.**
**Nibelungenring 41**
**D-6800 Mannheim 24(DE)**
Erfinder: **Butscher, Alfons**
**Carl-Orff-Strasse 37**
**D-6943 Birkenau(DE)**

(74) Vertreter: **Weissenfeld-Richters, Helga, Dr.**
**Höhnerweg 2**
**D-6940 Weinheim/Bergstrasse(DE)**

## (54) Erosionsgeschützter Pflanzenträger.

(57) Erosionsgeschützter Pflanzenträger zur Verwendung auf Dächern, umfassend eine Oberschicht (3) aus Erde, die auf eine biegesteife Folie (1) aufgebracht und gegebenenfalls verdichtet ist. Die Folie (1) ist mit ihre Oberseite überragenden, in die Oberschicht (3) eingreifenden Vorsprüngen (2) versehen.

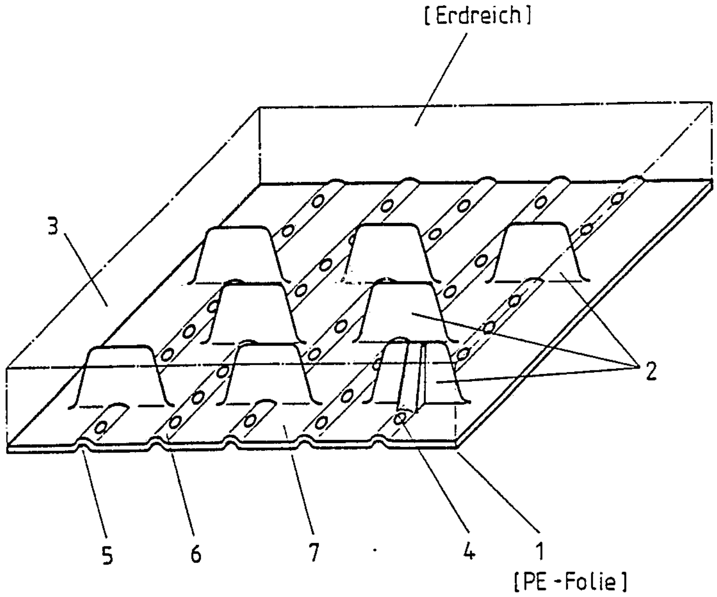


EP 0 304 548 A1

# Erosionsgeschützter Pflanzenträger

Die Erfindung betrifft einen erosionsgeschützten Pflanzenträger nach dem Oberbegriff von Anspruch 1.

Ein solcher Pflanzenträger ist bekannt. Er besteht aus einem teppichartigen Material, das im Bereich seiner Oberseite mit vorstehenden Faserschlingen und Schlaufen versehen ist. Die damit erzielte Erosionsunterdrückung ist indessen wenig befriedigend und wird insbesondere den Erfordernissen, die sich bei der Begrünung geneigter Dächer ergeben, nicht gerecht.

Der Erfindung liegt die Aufgabe zugrunde, einen solchen Pflanzenträger derart weiterzuentwikkeln, daß auch im Bereich geneigter Dachflächen das Auftreten von Erosionserscheinungen weitgehend ausgeschlossen ist.

Diese Aufgabe wird erfindungsgemäß bei einem Pflanzenträger der eingangs genannten Art mit den kennzeichnenden Merkmalen von Anspruch 1 gelöst. Auf vorteilhafte Ausgestaltungen nehmen die Ansprüche 2 bis 10 bezug.

Bei dem erfindungsgemäßen Pflanzenträger besteht die Unterschicht aus einer biegesteifen Folie, die mit ihre Oberseite überragenden, in die Oberschicht eingreifenden, biegesteifen Vorsprüngen versehen ist. Durch die biegesteife Ausbildung der Vorsprünge ist eine Querverschiebung der Oberschicht ausgeschlossen. Sie läßt sich durch Einformung von Stützrippen weiter vergrößern. Die Folie wird während ihrer bestimmungsgemäßen Verwendung durch das die Oberschicht bildende, eine relativ große Dichte aufweisende Erdreich belastet, was Deformierungen weitestgehend vorbeugt und den Vorsprüngen einen festen Stand auf dem ebenen Teil der Folie verleiht.

Die Absicherung des Erdreiches gegenüber Erosionserscheinungen ist dementsprechend ausgezeichnet, eine Verwendung des Pflanzenträgers auf geneigten Dächern ohne weiteres möglich. Die Folie kann von Drainageöffnungen senkrecht durchdrungen sein, um die senkrechte Abführung überschüssiger Nässe zu ermöglichen und ein Aufschwemmen des Erdreiches zu verhindern. Zweckmäßig münden die Drainageöffnungen unterseitig in Abflußrinnen, welche durch kanalartig ausgebildete Eintiefungen der Unterseite der Folie gebildet sind. Die Folie kann zugleich an der Stelle der Eintiefungen mit sich parallel zu diesen erstreckenden, die Oberseite überragenden Rippen versehen sein, was die insgesamt vorhandene Steifigkeit erhöht und es gestattet, relativ dünnwandige Bahnenmaterialien zur Herstellung der Folie zu verwenden. Diese sollen möglichst aus einem Werkstoff bestehen, der inert ist gegenüber den im Erdreich auftretenden Bedingungen. Die Verwendung von Polyolefinen und insbesondere von Polyethylen hat sich unter diesem Gesichtspunkt ausgezeichnet bewährt. Auch sind Polyolefine kostengünstig verfügbar und relativ leicht zu verarbeiten. Sie lassen sich bedarfsweise durch Einmischung von Ruß gegen eine Schädigung durch UV-Strahlen stabilisieren.

Die Vorsprünge können im Zuge von sich parallel zueinander erstreckenden Linien angeordnet sein, wobei sich die Linien möglichst quer zur Neigungsrichtung der abzudeckenden Fläche erstrecken sollten. Die Gestalt der Vorsprünge ist an sich beliebig. In Hinblick auf die problemlose und vollständige Auffüllung aller Zwischenräume der Vorsprünge hat es sich indessen als vorteilhaft bewährt, wenn diese einen nach oben zunehmend verjüngten Querschnitt haben. Dieser sollte an der Oberseite der Vorsprünge in einer Richtung eine Weite von nicht mehr als 10 mm haben, um Ungleichmäßigkeiten des Bewuchses zu verhindern, wenn die Vorsprünge die Oberseite der Oberschicht näherungsweise erreichen.

Die Vorsprünge sollen in Hinblick auf die Unterdrückung von Erosionserscheinungen möglichst von länglicher Gestalt sein und sich parallel zu den Linien erstrecken, auf denen sie angeordnet sind. Eine gleichmäßige Durchwurzelung der Oberschicht wird dabei insbesondere dann erreicht, wenn die Vorsprünge quer zu ihrer Erstreckung verlaufende Durchbrechungen aufweisen und wenn die Durchbrechungen der Vorsprünge benachbarter Linien derart seitlich versetzt sind, daß sich eine gegenseitige Überlappung der Vorsprünge ergibt. Die Bildung von sich in Neigungsrichtung erstrekkenden Erosionsrinnen wird dadurch völlig ausgeschlossen.

Die Vorsprünge und die Rippen können ineinander übergehend ausgebildet sein, was die Steifigkeit der gegenseitigen Zuordnung erhöht. Auch ein gelegentliches Begehen oder Befahren des Pflanzenträgers mit leichte Fahrzeugen, beispielsweise im Zusammenhang mit Pflegemaßnahmen am Bewuchs, ist in diesem Falle ohne weiteres möglich. Zweckmäßig bestehen die Vorsprünge und/oder die Rippen aus tiefgezogenen Abschnitten der Folie. Die Herstellung ist in diesem Falle besonders kostengünstig möglich.

Der Gegenstand der vorliegenden Erfindung wird nachfolgend anhand der als Anlage beigefügten Zeichnung weiter erläutert. Diese nimmt Bezug auf eine perspektivische Darstellung des erfindungsgemäßen Pflanzenträgers in seiner bestimmungsgemäßen Verwendung.

Der gezeigte Pflanzenträger besteht aus der biegesteifen Folie 1 aus Polyethylen hoher Dichte, welche eine Dicke von 1 bis 5 mm, vorzugsweise eine solche von 1,5 bis 2 mm hat. Die Folie weist ihre Oberseite überragende, in die Oberschicht 3 aus Erdreich eingreifende, biegesteife Vorsprünge 2 auf, die eine Höhe von 10 bis 100 mm und vorzugsweise von 50 mm haben.

Der Querschnitt der Vorsprünge ist in Richtung nach oben zunehmend verjüngt, wodurch sich in jeder Richtung ein etwa keilförmiges Profil ergibt. Am unteren Ende haben die Vorsprünge eine Breite von 10 bis 50 mm, vorzugsweise eine solche von 20 bis 30 mm und eine Länge von 20 bis 500 mm, vorzugsweise eine solche von 80 bis 120 mm.

Die einzelnen Vorsprünge sind mit ihrer Längsrichtung im Zuge sich in gleichen Abständen parallel zueinander erstreckender, gedachter Linien angeordnet und haben im Zuge der Linien am unteren Ende einen gegenseitigen Abstand von 10 bis 100 mm, vorzugsweise einen solchen von etwa 50 mm. Der Abstand benachbarter Linien beträgt 10 bis 100 mm, vorzugsweise 50 mm, wobei die einzelnen Vorsprünge benachbarter Linien einander auf Lücke zugeordnet sind, derart, daß die sich in Querrichtung erstreckende Durchbrechung zwischen zwei in Längsrichtung aufeinander folgenden Vorsprüngen jeweils von dem nächst benachbarten Vorsprung überdeckt ist. Bei einer Verlegung der Folie in einer Form, in der sich die gedachten Linien quer zur Neigungsrichtung erstrecken, wird hierdurch der Bildung von Erosionsrinnen in dem nachfolgend aufgeschütteten Erdreich vorgebeugt. Dieses wird wenigstens in einer solchen Schichtdicke aufgebracht, daß die am weitesten vorstehenden Spitzen der Vorsprünge vollständig überdeckt sind. Die Einwirkung ultravioletter Strahlung auf den die Folie bildenden Werkstoff ist dadurch ausgeschlossen und eine große Gebrauchsdauer gewährleistet.

Die Vorsprünge 2 werden im Bereich der Folie 1 von sich parallel zur Neigungsrichtung erstrekkenden Rippen 6 durchschnitten, welche ebenso wie die Vorsprünge 2 durch einen Tiefziehprozeß erzeugt sind. Die Rippen 6 gehen dadurch kontinuierlich in die Vorsprünge 2 über, wodurch letztere eine ausgezeichnete, zusätzliche Abstützung erhalten.

Das nachfolgend aufgeschüttete Erdreich ist dadurch in besonders guter Weise vor Rutschungen geschützt. Im Bereich der Rippen 6 ist die Folie 1 von sie senkrecht durchdringenden Drainageöffnungen 4 durchbrochen, welche in die unterhalb der Rippen verlaufenden Abflußrinnen 5 münden. Diese haben einen größeren Querschnitt als die Drainageöffnungen 4, wodurch die problemlose Abführung überschüssiger Nässe gewährleistet ist. Auch bei gelegentlichen Starkregenfällen sind daher Erosionsgefahren nicht mehr zu befürchten.

Die Vorsprünge sind im allgemeinen untereinander identisch ausgebildet. Sie können hinsichtlich der Erzielung einer noch weiter verbesserten Biegesteifigkeit ein- oder beidseitig durch Stützrippen auf dem ebenen Teil der Folie abgestützt sein. eine beispielhafte Ausführung eines solchen Vorsprunges ist in der Darstellung unten rechts gezeigt. Es ist deutlich zu erkennen, daß die Stützrippe bei dreieckiger Gestalt eine Höhe hat, die mit derjenigen des Vorsprunges im wesentlichen übereinstimmt. Dennoch erfährt der Vorsprung an seinem oberen Ende keine wesentliche Verbreiterung.

## Ansprüche

1. Erosionsgeschützter Pflanzenträger zur Verwendung auf Dächern, umfassend eine Oberschicht aus Erde, die auf eine Unterschicht aus polymerem Werkstoff aufgebracht und gegebenenfalls verdichtet ist, dadurch gekennzeichnet, daß die Unterschicht aus einer biegesteifen Folie (1) besteht und daß die Folie mit ihre Oberseite überragenden, in die Oberschicht (3) eingreifenden Vorsprüngen (2) versehen ist.

2. Pflanzenträger nach Anspruch 1, dadurch gekennzeichnet, daß die Folie (1) von Drainageöffnungen (4) senkrecht durchdrungen ist.

3. Pflanzenträger nach Anspruch 2, dadurch gekennzeichnet, daß die Drainageöffnungen (4) unterseitig in Abflußrinnen (5) münden und daß die Abflußrinnen (5) durch kanalartig ausgebildete Eintiefungen der Folie (1) gebildet sind.

4. Pflanzenträger nach Anspruch 3, dadurch gekennzeichnet, daß die Folie an der Stelle der Eintiefungen (5) mit sich parallel zueinander erstreckenden, die Oberseite überragenden Rippen (6) versehen ist.

5. Pflanzenträger nach Anspruch 1 bis 4, dadurch gekennzeichnet, daß die Vorsprünge (2) im Zuge von sich parallel zueinander erstreckenden Linien angeordnet sind.

6. Pflanzenträger nach Anspruch 5, dadurch gekennzeichnet, daß die Vorsprünge (2) von länglicher Gestalt sind und sich parallel zu den Linien erstrecken.

7. Pflanzenträger nach Anspruch 6, dadurch gekennzeichnet, daß die Vorsprünge quer zu ihrer Erstreckung verlaufende Durchbrechungen (7) aufweisen und daß die Durchbrechungen (7) der Vorsprünge (2) benachbarter Linien derart seitlich versetzt sind, daß sich eine Überlappung der Vorsprünge (2) ergibt.

8. Pflanzenträger nach Anspruch 1 bis 7, dadurch gekennzeichnet, daß die Vorsprünge (2) die Oberschicht (3) näherungsweise ganz durchdringen.

9. Pflanzenträger nach Anspruch 4 bis 8 dadurch gekennzeichnet, daß die Vorsprünge (2) und die Rippen (6) einander senkrecht durchschneiden.

10. Pflanzenträger nach Anspruch 4 bis 9, dadurch gekennzeichnet, daß die Vorsprünge (2) und/oder die Rippen (6) aus tiefgezogenen Abschnitten der Folie (1) bestehen.

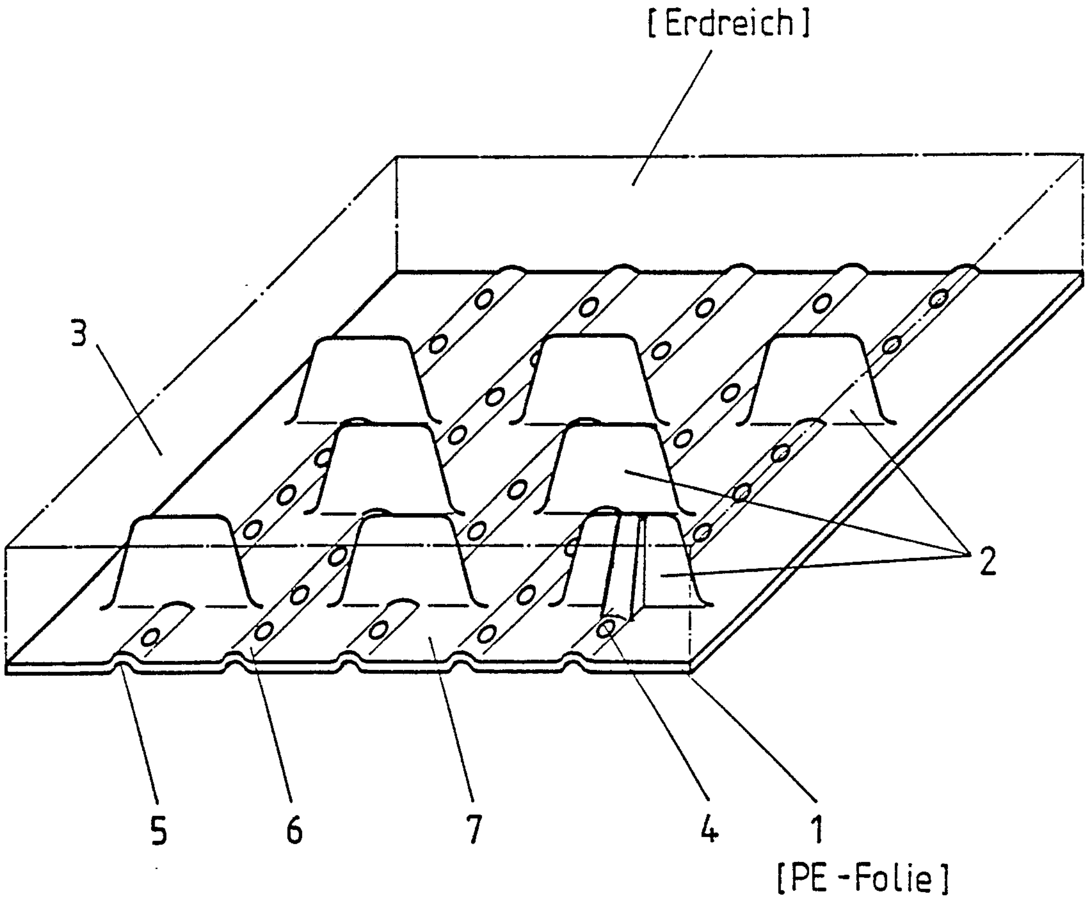
[Erdreich]
3
2
5
6
7
4
1
[PE-Folie]

Europäisches Patentamt

# EUROPÄISCHER RECHERCHENBERICHT

Nummer der Anmeldung

EP 88 10 7668

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 267 367 (NAGAMATSU)<br>* Seite 1, Absatz 1; Seiten 4-5; Figuren 1-4 * | 1-6,9 | A 01 G 9/00<br>E 04 D 11/00 |
| X | DE-U-8 506 794 (TECHNOFLOR DEUTSCHLAND)<br>* Seiten 7-8; Figuren 1,2 * | 1,5,6 | |
| A | | 7 | |
| A | EP-A-0 045 376 (DREFAHL)<br>* Seite 11, Absätze 1-2; Figur 1 * | 1,5,6 | |

RECHERCHIERTE SACHGEBIETE (Int. Cl.4)

A 01 G
E 04 D

Der vorliegende Recherchenbericht wurde für alle Patentansprüche erstellt

| Recherchenort | Abschlußdatum der Recherche | Prüfer |
|---|---|---|
| DEN HAAG | 28-09-1988 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)